# FASCICULE DE BREVET EUROPEEN

(11) **EP 0 616 883 B1**
(45) Date de publication et mention de la délivrance du brevet: **17.09.1997**
(21) Numéro de dépôt: 94109000.3
(22) Date de dépôt: 25.07.1989
(51) Int. Cl.: B32B 17/10, C03C 27/12, C03C 3/087, C03C 4/02

(54) **Vitrage à couche électroconductrice obtenue par pyrolyse de composés en poudre, utilisable en tant que pare-brise pour automobile**
Elektrisch leitende Glasscheibe, erhalten durch Pyrolyse von pulverigen Verbindungen, verwendbar als Schutzscheibe für Fahrzeuge
Electriacally conductive glass pane obtained by pyrolysis of powder compounds for use as a windscreen for a vehicle

(30) Priorité: 27.07.1988 FR 8810138
(43) Date de publication de la demande: 28.09.1994
(62) Demande divisionnaire de: 89402097.3
(73) Titulaire: SAINT-GOBAIN VITRAGE, 92400 Courbevoie (FR)
(72) Inventeur: Harmand, Hélène, Coogie NSW 2034 (AU); Trouve, Maurice, F-77140 Nemours (FR); Sauvinet, Vincent, F-75009 Paris (FR)
(74) Mandataire: Renous Chan, Véronique

(56) Documents cités:
- DE-A- 1 153 494
- FR-A- 2 082 459
- SPRECHSAAL, vol.121, no.1, Janvier 1988, COBURG DE pages 42 - 44 J. KOCIK ET AL 'Färben des Glases, V.'

## Description

La présente invention concerne un vitrage muni d'un revêtement électroconducteur à base d'oxydes métalliques obtenu par pyrolyse de composés en poudre, utilisable notamment en tant que pare-brise pour automobile.

En particulier, l'invention concerne un vitrage comprenant un tel revêtement qui présente une résistance électrique suffisamment basse et malgré tout une bonne transmission lumineuse dans le visible pour que son utilisation en tant que vitrage chauffant pour l'automobile puisse être envisagée.

Il est connu par divers brevets antérieurs de fabriquer des vitrages revêtus de couches conductrices ayant la transmission lumineuse supérieure à 75 % ou 70 % selon les législations, qui autorise leur utilisation en tant que vitrages pour l'automobile et présentant une résistance par carré de l'ordre de 10 ohms et même descendant jusque 5 ohms.

Ainsi le document de brevet EP-A-192 009 propose des vitrages revêtus d'une couche d'ITO (indium tin oxide) pyrolysée obtenue à partir de composés en poudre, d'épaisseur de 1900 et de 3000 Angstroems, présentant des résistances par carré qui sont respectivement de 11 et de 7,5 ohms et des facteurs de transmission lumineuse respectivement de 83 et 82 %.

La couche de 3000 Angstroems d'épaisseur est rouge mauve en réflexion, ce qui sur le plan esthétique, harmonie avec les couleurs de carrosseries des voitures, a peu de chance d'être accepté.

En outre ces couches pyrolysées présentent un léger mouchetis et un léger voile qui ne sont pas du tout génants pour un vitrage utilisé dans le bâtiment, mais qui pour un vitrage automobile peuvent être contestés. Ainsi, les normes pour les pare-brise d'automobiles requièrent que le voile (pourcentage de lumière diffuse) ne soit pas supérieur à 0,5 %, ce qui est inférieur à ce que l'oeil est capable d'apercevoir en vision normale (2 à 3 %) et à ce qui est accepté pour des vitrages destinés au bâtiment.

Il est à noter que ce brevet antérieur EP 192 009 propose la réalisation de vitrages feuilletés à couche ITO, mais pour faciliter le traitement thermique réducteur de l'ITO, il prévoit d'opérer ledit traitement thermique réducteur sur le vitrage feuilleté réalisé, avec un brûleur, le brûleur ayant l'avantage d'échauffer rapidement la couche d'ITO pour la traiter, sans avoir le temps d'échauffer la structure du vitrage, la couche d'ITO étant pour cela disposée sur une face extérieure du vitrage, directement au contact de la flamme du brûleur.

Le document de brevet US 4 490 227 propose quant à lui des vitrages revêtus d'une couche d'ITO obtenue par des techniques sous vide, d'épaisseur de l'ordre de 2800 Angstroems, de transmission de l'ordre de 78 %, de résistance au carré approximativement de 7 à 10 ohms.

Ces couches sous vide sont longues à fabriquer, coûteuses et l'obtention de résistances plus faibles augmenterait le temps de fabrication et le coût d'une part, risquerait de faire franchir les 75 % ou 70 % de transmission requis pour des vitrages automobiles d'autre part.

Le document US 4 655 811, propose des couches d'ITO déposées sous vide ayant des résistances par carré descendant jusqu'à 5 ohms et conservant une transmission lumineuse compatible avec les utilisations dans le domaine de l'automobile. Les coûts de production sont élevés, les temps de production sont longs et l'augmentation des épaisseurs augmenterait encore ces coûts et ces temps de production d'une part et diminuerait trop la transmission lumineuse d'autre part.

Sont également connus des vitrages revêtus d'un empilement de couches obtenues par des techniques sous vide, couches parmi lesquelles est présente une couche d'Ag entourée de couches de diélectriques. Ces vitrages ont, comme les précédents déjà mentionnés, une résistance électrique supérieure à 5 ohms et en outre ces couches s'oxydent et se dégradent facilement, notamment à l'humidité. Par ailleurs, les feuilles de verre revêtues de ces empilements de couches contenant une couche d'Ag, nicessitent des pricautions importantes lors de leur feuilletage en vue de constituer des vitrages feuilletis, car la moindre salissure, la moindre poussihre crie un difaut visible.

La prisente invention vise fournir un vitrage revjtu d'un diptt ilectroconducteur d'ITO, utilisable en tant que vitrage pour l'automobile et en giniral pour vihicule, susceptible d'jtre chauffi ilectriquement grbce l'inergie ilectrique disponible sur le vihicule, dont le diptt ITO soit risistant, soit esthitique (couleur neutre ou identique celle des vitrages anti-solaires pour automobiles utilisis et appriciis actuellement, sans mouchetis, sans voile, ...) et dont le co{t de production soit moins ilevi que celui des vitrages produits sois vide.

Cette utilisation des vitrages dans l'automobile implique une transmission lumineuse pour l'illuminant A, (T_{L}), importante, qui selon les riglementations doit jtre au moins de 75 % ou 70 %, suivant les ligislations.

Elle vise de prifirence un vitrage revjtu d'un diptt ilectroconducteur d'ITO ayant une risistance ilectrique par carri igale ou avantageusement infirieure 5 ohms.

En outre, elle vise aussi de prifirence, un vitrage amiliorant le confort d'iti des passagers du vihicule, donc capable de prisenter malgri la transmission lumineuse importante requise par les riglementations, une transmission inergitique abaissie par rapport un vitrage traditionnel.

Elle propose pour cela un vitrage ayant au moins une plaque de verre revêtue d'une couche d'ITO, obtenue par pyrolyse d'un mélange pulvérulent d'un composé d'étain, notamment du DBTO (oxyde de dibutylétain) et d'un composé d'indium, en particulier le formiate d'indium, puis par traitement réducteur de la couche ainsi obtenue, associée avec une feuille d'un matériau du type matière plastique souple à indice s'approchant plus de celui de la couche ITO que l'indice de l'air.

Cette feuille est en un matériau appartenant au groupe suivant :
- PVC (butyral de polyvinyle),
- PVC (chlorure de polyvinyle),
- PU (polyuréthane),
et possède un indice compris entre l'indice 1 de l'air et l'indice de l'ordre de 1,8 de la couche ITO, notamment un indice de l'ordre de 1,5.

Grâce à la disposition de la couche ITO sur une face de feuille de verre qui permette sa mise en contact avec un matériau souple apte à épouser intimement les éventuelles irrégularités de surface de la couche ITO, grâce à l'indice élevé de ce matériau, les mouchetis sont pratiquement supprimés et en outre le possible aspect voilé de la couche ITO est inexistant et compatible avec les réglementations.

Avantageusement, la couche ITO a une épaisseur telle que sa couleur est une couleur appréciée pour les vitrages d'automobile, en particulier une couleur légèrement verte en réflexion.

Suivant un premier mode de réalisation, la couche d'ITO a une épaisseur d'au moins 330 nanomètres, ce qui lui confère une résistance par carré égale ou inférieure à 5 Ohms et de préférence une épaisseur de l'ordre de 350-380 nanomètres, ce qui lui confère une résistance par carré de l'ordre de 4,5 Ohms - 4,0 Ohms.

Selon un autre mode de réalisation, la couche ITO a une épaisseur de l'ordre de 180 nanomètres, ce qui lui confère une résistance par carré de l'ordre de 10 Ohms.

Avantageusement pour conférer au vitrage des propriétés de transmission énergétique améliorée visant à accroître le confort d'été et également pour contribuer à l'amélioration de l'aspect dudit vitrage, la plaque de verre portant le revêtement d'ITO et/ou une autre plaque de verre qui lui est associée pour constituer avec elle un vitrage feuilleté est en verre teinté dans sa masse, du type dit « TSA » ou « TSA²⁺ ».

L'invention sera maintenant décrite plus en détail en référence aux figures jointes qui représentent :
- **figure 1** : une première variante d'un vitrage selon l'invention, en vue éclatée,
- **figure 2** : un vitrage feuilleté ayant selon l'invention une couche d'ITO,
- **figure 3** : un vitrage feuilleté selon l'invention ayant reçu ses dépôts d'émail et amenées de courant électrique en vue d'être monté en tant que pare-brise d'automobile.

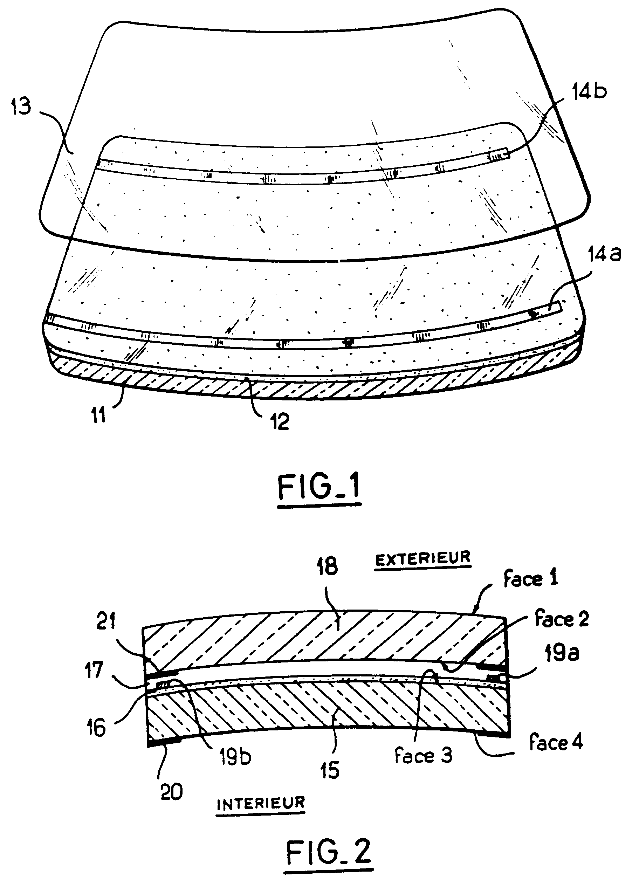

La figure 1 montre un vitrage constitué d'une seule plaque de verre 11 revêtue d'une couche 12 d'ITO, et associée à une feuille 13 d'un matériau souple à indice de réfraction supérieur à celui de l'air compris entre l'indice de l'air et l'indice de la couche d'ITO (1,8) et notamment de l'ordre de 1,5, apte à parfaitement adhérer sur la couche 12, à en épouser intimement les éventuelles irrégularités, apte également à être utilisée telle quelle, c'est-à-dire sans protection ou recouvrement.

Une telle feuille 13, à base de polyuréthane (PU) est décrite en détail dans les documents de brevets publiés en EUROPE sous les numéros 54 491, 132 198, 133 090 et le document de brevet publié en FRANCE sous le numéro 2 398 606. Selon ces brevets, la feuille de PU est une feuille bicouche comprenant une couche de PU thermoplastique absorbeur d'énergie et une couche de PU thermodurcissable autocicatrisante et antilacération.

La plaque 11 est en verre silico-sodo-calcique utilisé classiquement pour les vitrages automobiles et bâtiments. Il peut s'agir d'un verre clair, c'est-à-dire non coloré, présentant une transmission lumineuse importante, supérieure à 90% sous une épaisseur de 4 mm. Il peut s'agir aussi, d'un verre coloré dans sa masse apte à procurer un confort d'été accru pour les passagers du véhciule ou du local équipé de tels verres, du fait de son facteur de transmission énergétique réduit.

Avantageusement la coloration du verre est la même que celle de la couche, à savoir vert pour les épaisseurs de couche de l'ordre de 350-380 nm ou 180 nm.

Ainsi du seul fait de la coloration du verre, les éventuelles légères irrégularités de couleur de la couche sont masquées. En outre la couleur verte est fortement appréciée pour les vitrages automobiles.

Par ailleurs, ces verres teintés dans leur masse par des oxydes de fer, possèdent des propriétés d'absorption du rayonnement IR, et donc en général des propriétés énergétiques intéressantes, grâce auxquelles le confort d'été est accru.

Ainsi comme verre coloré, on peut utiliser du verre dit « TSA » contenant Fe₂O₃ dans des proportions pondérales de l'ordre de 0,55 à 0,62%, FeO pour environ 0,11 à 0,16%, ce qui conduit à un rapport Fe²⁺/Fe de l'ordre de 0,19 à 0,25, CoO pour moins de 12 ppm et même de préférence pour moins de 10 ppm. Il en résulte des propriétés par exemple pour une épaisseur de 3,85 mm de transmission lumineuse (T_{L}) élevées voisines de 78%, un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose qu'une transmission lumineuse de 70%, un verre un peu plus coloré que le « TSA », mais présentant par contre une transmission lumineuse un peu plus faible, à savoir un « TSA²⁺ ».

Ce « TSA²⁺ » est coloré par les mêmes oxydes que précédemment mais dans des proportions légèrement différentes.

Ainsi les proportions d'oxydes métalliques sont les suivantes :
- Fe₂O₃ : approximativement compris entre 0,75 et 0,90%
- FeO: approximativement compris entre 0,15 et 0,22%
- CoO : inférieur à 17 ppm et même de préférence inférieur à 10 ppm soit Fe²⁺/Fe = 0,20 environ.

Il en résulte pour ce verre « TSA²⁺ », en 3,85 mm d'épaisseur les propriétés suivantes :
- T_{L} : de l'ordre de 72%
- T_{E} : de l'ordre de 50%
ce qui conduit à un rapport T_{L}/T_{E} de l'ordre de 1,40 ou 1,50.

Ainsi un vitrage automobile selon l'invention peut être réalisé avec une feuille de verre 11 en verre « TSA » d'épaisseur 3 mm, recouvert d'une couche ITO d'épaisseur de l'ordre de 350-380 nm ou a fortiori de l'ordre de 180 nm, elle-même recouverte de polyuréthane comme décrit dans les brevets antérieurs déjà cités. Avec l'épaisseur de couche de 180 nm, l'épaisseur de verre « TSA » peut être légèrement plus importante, et atteindre jusqu'à 3,5 ou 4 mm.

Il en résulte un vitrage de couleur très légèrement verte en transmission, verte en réflexion ayant une T_{L} compatible avec la réglementation auto (plus de 75%) et une T_{E} de l'ordre de 1,40.

Si l'on veut à la place du verre « TSA » employer du « TSA²⁺ », en ayant des coefficients de transmission lumineuse compatibles avec les réglementations, on peut choisir une plaque de verre 11 en verre « TSA²⁺ » de 3 mm d'épaisseur, de préférence avec une épaisseur de couche de 180 nm. Il en résulte alors pour le vitrage fini un coefficient TL supérieur à 70%, un coefficient T_{L}/T_{E} de l'ordre de 1,50, c'est-à-dire une transmission énergétique réduite et donc un confort d'été amélioré.

Bien entendu des vitrages selon l'invention avec des épaisseurs de verre pour constituer la plaque 11, inférieures à celles énoncées ci-dessous, sont a fortiori possibles puisque cela permet d'augmenter la transmission lumineuse et qu'en conséquence les réglementations restent satisfaisantes.

La figure 2 montre un vitrage feuilleté à au moins deux épaisseurs de verre, constitué d'une première plaque de verre 15 revêtue d'une couche 16 d'ITO associée à une feuille 17 d'un matériau à indice de réfraction supérieur à celui de l'air, compris entre l'indice de l'air et l'indice de la couche d'ITO (1,8) et notamment de l'ordre de 1,5 apte à parfaitement adhérer sur la couche 16, à en épouser intimement les éventuelles irrégularités, apte également à constituer l'intercalaire plastique d'un vitrage feuilleté, constitué également d'une seconde plaque de verre 18. Si désiré, des feuilles supplémentaires de verre, d'intercalaires plastiques peuvent être ajoutées pour former un feuilleté plus épais, plus résistant.

La feuille 17 est par exemple en PVB (butyral de polyvinyle) classiquement utilisé pour réaliser des vitrages feuilletés, en PVC (chlorure de polyvinyle), en PU (polyuréthane).

La plaque de verre 18 et/ou éventuellement la plaque de verre 15 est avantageusement en verre coloré dans sa masse, à propriétés énergétiques améliorées, comme dit précédemment en verre « TSA » ou « TSA²⁺ ».

Les couches 12 et 16 d'ITO des réalisations montrées figures 1 et 2 sont obtenues par pyrolyse d'un mélange de poudres d'un composé d'indium comme constituant essentiel, notamment le formiate d'indium (InFo) et d'un composé d'étain, notamment de l'oxyde de dibutylétain (DBTO). Dans le cas de InFo et DBTO les proportions pondérales sont de l'ordre de 90% de InFo et 10% de DBTO ; les granulométries sont comprises entre 5 et 20 microns et de préférence entre 5 et 15 microns.

Un tel mélange de InFo et DBTO est décrit dans le document de brevet européen 192 009.

La distribution du mélange de poudres sur le substrat en verre est faite à l'aide d'installations déjà décrites en détail dans les documents de brevets européens publiés sous les n° 125 513, 130 919, 191 258, 189 709, 188 962.

Pour pouvoir alimenter électriquement la couche 12 ou 16 des bandes d'amenée de courant sont à mettre en place.

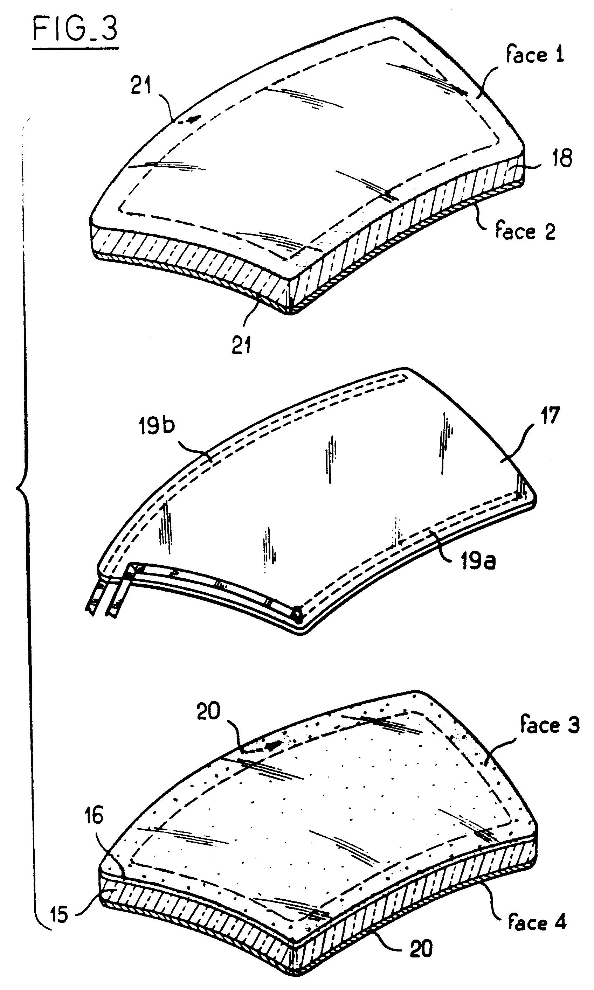

Un vitrage du type de celui de la figure 2 est montre en vue éclatée plus détaillée, avec tous ses équipements (bandes conductrices dépôts d'émail) en figure 3. On retrouve sur cette figure 3 les mêmes éléments qu'en figure 2 et avec les mêmes références, à savoir, la feuille de verre 15, portant la couche 16 d'ITO, une seconde feuille de verre 18 exempte de toute couche, mais éventuellement en un verre coloré dans sa masse, du type « TSA » ou « TSA²⁺ », la feuille 17 de matière du type PVB, d'indice supérieur à celui de l'air et éventuellement colorée, les bandes conductrices 19a et 19b notamment sous la forme de clinquants, disposées sensiblement horizontalement et sensiblement parallèles, l'une en partie haute du vitrage, l'autre en partie basse.

Comme montré sur la figure 3, la couche 16 d'ITO est déposée en face 3. Cette couche 16 est par exemple déposée à la sortie du bain float d'une installation de fabrication de verre plat, sur un ruban de verre plat fabriqué en continu. Ce ruban est découpé en rectangles, puis suivant la forme développée du pare-brise ou en général vitrage à réaliser ; ceci constitue alors la plaque 15 revêtue de sa couche 16. Cette plaque 15 reçoit alors sur sa face non revêtue d'ITO, c'est-à-dire la face qui constituera la face 4 du vitrage feuilleté, un dépôt 20 d'émail à sa périphérie par une technique classique de sérigraphie. Ensuite cette plaque 15 revêtue d'ITO d'un côté, avec son dépôt d'émail périphérique de l'autre, est associée avec une autre plaque de verre, la plaque 18, découpée elle aussi par exemple dans le ruban sortant d'une ligne float, en verre clair ou en verre teinté dans sa masse. Cette plaque 18 plane reçoit sur une de ses faces, celle qui constituera la face 2 du vitrage feuilleté, un dépôt périphérique d'émail 21. Avantageusement, ce dépôt 21 en face 2 est recuit.

Les deux plaques de verre 15 et 18 sont appairées, c'est-à-dire superposées, face 2 contre face 3, et bombées simultanément par chauffage et par exemple affaissement sur un cadre ou squelette de bombage.

La plaque 15 seule, ou les deux plaques encore superposées à la suite du bombage, est (sont) alors soumise(s) au traitement réducteur pour valoriser les propriétés de la couche d'ITO 16. Dans les pare-brise de forme bombée classique, la couche 16 est sur une face convexe, elle est donc mise en légère extension par bombage du verre, sans précaution particulière et malgre cela ses propriétés, en particulier électriques ne sont pas affectées.

La feuille intercalaire 17 de matière à indice voisin de celui de la couche d'ITO, en particulier en PVB, est découpée, associée avec les clinquants 19a et 19b notamment par soudage ponctuel à chaud desdits clinquants sur les bords haut et bas de la feuille. Avantageusement, à une extrémité de la bande haute 19a, le clinquant métallique n'est pas coupé, mais passe de l'autre côté du PVB au travers d'une incision pratiquée dans le PVB, puis descend verticalement le long du bord du PVB jusqu'au niveau du brin inférieur 19b de clinquant. Les deux brins 19b et 19a de clinquant, isolés l'un de l'autre sont associés pour pouvoir sortir en un endroit unique.

Cette feuille de matière type PVB est alors mise en intercalaire entre les deux plaques de verre 15 et 18, les brins 19a et 19b du clinquant étant accolés à la couche 16 sur la face 3.

L'ensemble du vitrage ainsi réalisé est feuilleté par les techniques classiques du feuilletage, par pressage, action du vide et de la chaleur. Cette technique de feuilletage étant classique, elle ne sera pas développée ici. Signalons seulement que des pressions de l'ordre de 10 bars, des températures de l'ordre de 130°C peuvent être mises en oeuvre à cet effet pendant des temps de l'ordre de l'heure.

Les extrémités des brins 19a et 19b sortant du vitrage ainsi réalisé sont disponibles pour être branchés sur la source de courant électrique du véhicule sur lequel le vitrage sera monté.

Eventuellement, ces brins 19a et 19b peuvent être coupés et reliés a une connexion particulière facilitant la liaison avec la source de courant.

On peut comme déjà dit utiliser pour la plaque de verre 18 un verre dit "TSA" pour améliorer les qualités énergétiques du vitrage.

Ainsi la plaque 18 peut être en un verre "TSA" de 2,1 mm ou 2,2 mm d'épaisseur, la plaque 15 revêtue ITO peut être en un verre clair classique de 2,1 à 2,6 mm d'épaisseur et la feuille 17 peut être un PVB de 0,76 mm d'épaisseur. Il en résulte un vitrage d'aspect légèrement verdâtre, de couleur parfaitement uniforme avec un coefficient T_{L} de l'ordre de 77 %, donc en accord avec toutes les réglementations en matière de vitrage auto et un coefficient T_{E} de l'ordre de 50 % soit un rapport T_{L}/T_{E} de l'ordre de 1,5.

Dans un autre mode de réalisation la plaque 18 a 2,6 mm d'épaisseur, toutes autres choses égales par ailleurs le coefficient T_{L} tombe légèrement en dessous de 75 % pour une épaisseur de couche ITO de l'ordre de 350-380 n.m, mais satisfait la réglementation des pays où un T_{L} de seulement 70 % est éxigé. Par contre, pour une épaisseur de couche ITO de l'ordre de 180 n.m, le seuil de 75 % est satisfait.

Dans la mesure où les bandes d'amenée de courant 19a et 19b ne sont pas des clinquants métalliques, mais des bandes sérigraphiées, lesdites bandes sérigraphiées sont déposées sur les bords supérieurs et inférieurs de la plaque de verre 15 revêtue de sa couche ITO sur cette couche ITO, donc en face 3 du vitrage feuilleté après découpe aux dimensions du vitrage fini et après émaillage périphérique en face 4 de la même plaque 15.

Avantageusement, avant association avec l'autre plaque de verre 18 pour bombage, ces bandes sérigraphiées sur la plaque 15 sont recuites.

Dans la mesure où le vitrage réalisé est du type montré sur la figure 1, c'est-à-dire avec une seule plaque de verre 11 revêtue ITO en association avec une feuille de matière d'indice supérieur à celui de l'air et aussi voisin que possible de celui de l'ITO, par exemple en PU, les bandes conductrices 14a et 14b sont elles aussi soit sérigraphiées soit en clinquants. Elles sont alors en contact avec la couche ITO.

Dans la mesure où il s'agit de bandes conductrices sérigraphiées, celles-ci peuvent être masquées de l'extérieur par un dépôt d'émail opaque non représenté sur la figure, de préférence continu tout à fait à la périphérie du vitrage, puis dégradé en pointillés du côté du centre du vitrage, la bande conductrice à l'Ag sérigraphiée étant avantageusement déposée en limite de l'émail, à cheval sur les pointillés dudit émail et sur la couche ITO seule.

Avantageusement pour ce vitrage du type de celui montré sur la figure 1, les clinquants métalliques ou les bandes sérigraphiées sont masqués par un cadre en matière thermoplastique monté in situ par la technique dite d'encapsulation. Ce cadre d'encapsulation peut aussi servir de cache, de protection et d'isolant pour le brin de clinquant métallique cheminant jusqu'à sa sortie du vitrage de l'autre côté de la feuille de PU, c'est-à-dire non en contact avec la couche ITO.

Bien entendu, une telle encapsulation est particulièrement intéressante dans le cas d'un vitrage selon la figure 3, mais elle peut également être mise en oeuvre sur un autre vitrage, par exemple celui montré figures 2 ou 3.

Ainsi donc, les bonnes propriétés de la couche ITO permettent son association avec des verres teintés dans leur masse. Il en résulte un vitrage à propriétés électriques, optiques et thermiques intéressantes.

Des épaisseurs de plaques de verre ont été proposées précédemment grâce auxquelles les réglementations sont respectées, mais bein entendu des épaisseurs plus faibles que celles proposées sont à fortiori acceptables, le coefficient T_{L} n'en sera que plus élevé.

La solidité de cette couche autorise le bombage de son support après dépôt, sans précaution particulière même lorsqu'après bombage ladite couche est disposée sur la face convexe de son support.

Ce viltrage peut être utilisé en tant que pare-brise chauffant pour automobile.

## Revendications

1. Vitrage comprenant au moins une feuille en verre silico-sodo-calcique teinté dans sa masse, à transmission énergétique réduite, **caractérisée en ce que** ladite feuille est formée d'un verre qui contient des oxydes colorants dans les proportions pondérales approximatives suivantes :
Fe₂O₃ de 0,55 à 0,62 %
FeO de 0,11 à 0,16%
CoO moins de 12 ppm.

2. Vitrage selon la revendication 1, **caractérisé en ce que** le rapport Fe²⁺/Fe dans le verre formant la feuille est de l'ordre de 0,19 à 0,25.

3. Vitrage selon l'une des revendications précédentes, **caractérisé en ce que** la feuille de verre présente un rapport de la transmission lumineuse sur la transmission énergétique T_{L}/T_{E} de l'ordre de 1,30.

4. Vitrage selon l'une des revendications précédentes, **caractérisé en ce que** la feuille de verre présente une T_{L} d'environ 78% et une T_{E} d'environ 60% notamment pour une épaisseur d'environ 3,85 nm.

5. Vitrage comprenant au moins une feuille en verre silico-sodo-calcique teinté dans sa masse, à transmission énergétique réduite, **caractérisé en ce que** ladite feuille est formée d'un verre qui contient des oxydes colorants dans les proportions pondérales approximatives suivantes :
Fe₂O₃ de 0,75 à 0,90 %
FeO de 0,15 à 0,22 %
CoO moins de 17 ppm.

6. Vitrage selon la revendication 5, **caractérisé en ce que** le rapport Fe²⁺/Fe dans le verre formant la feuille est de l'ordre de 0,20.

7. Vitrage selon la revendication 5 ou la revendication 6, **caractérisé en ce que** la feuille de verre présente un rapport de la transmission lumineuse sur la transmission énergétique T_{L}/T_{E} de l'ordre de 1,40 ou 1,50.

8. Vitrage selon l'une des revendications précédentes, **caractérisé en ce que** l'épaisseur de la feuille peut atteindre 3,5 ou 4 mm et que sa teinte est verte.

## Claims

1. Glazing comprising at least one soda-lime-silica glass sheet, coloured in the mass and with reduced energy transmission, characterized in that said sheet is formed from a glass containing colouring oxides in the following approximate weight proportions:
Fe₂O₃ : 0.55 to 0.62%
FeO : 0.11 to 0.16%
CoO : less than 12 ppm.

2. Glazing according to claim 1, characterized in that the Fe²⁺/Fe ratio in the glass forming the sheet is approximately 0.19 to 0.25.

3. Glazing according to either of the preceding claims, characterized in that the glass sheet has a light transmission to energy transmission ratio T_{L}/T_{E} of approximately 1.30.

4. Glazing according to any one of the preceding claims, characterized in that the glass sheet has a T_{L} of approximately 78% and a T_{E} of approximately 60%, more specifically for a thickness of approximately 3.85 nm.

5. Glazing comprising at least one soda-lime-silica glass sheet, coloured in the mass and with a reduced energy transmission, characterized in that said sheet is formed from a glass containing colouring oxides in the following approximate weight proportions:
Fe₂O₃ : 0.75 to 0.90%
FeO : 0.15 to 0.22%
CoO : less than 17 ppm.

6. Glazing according to claim 5, characterized in that the Fe²⁺/Fe ratio in the glass forming the sheet is approximately 0.20.

7. Glazing according to claim 5 or 6, characterized in that the glass sheet has a light transmission to energy transmission ratio T_{L}/T_{E} of approximately 1.40 or 1.50.

8. Glazing according to one of the preceding claims, characterized in that the thickness of the sheet can be 3.5 or 4 mm and that it is coloured green.

## Patentansprüche

1. Verglasung, die mindestens eine Scheibe aus in der Masse gefärbtem Kalk-Natron-Silicat-Glas mit verringertem Energiedurchgangsgrad umfaßt, **dadurch gekennzeichnet, daß** die Scheibe aus einem Glas gebildet ist, das farbgebende Oxide in folgenden näherungsweisen Gewichtsanteilen:
Fe₂O₃ 0,55 bis 0,62 %,
FeO 0,11 bis 0,16 % und
CoO weniger als 12 ppm
enthält.

2. Verglasung nach Anspruch 1, **dadurch gekennzeichnet, daß** das Verhältnis von Fe²⁺/Fe im die Scheibe bildenden Glas etwa 0,19 bis 0,25 beträgt.

3. Verglasung nach einem der vorhergehenden Ansprüche, **dadurch gekennzeichnet, daß** die Glasscheibe ein Verhältnis des Lichttransmissionsgrades zum Energiedurchgangsgrad von τ/g von etwa 1,30 aufweist.

4. Verglasung nach einem der vorhergehenden Ansprüche, **dadurch gekennzeichnet, daß** die Glasscheibe insbesondere bei einer Dicke von etwa 3,85 mm einen τ von etwa 78 % und einen g von etwa 60 % aufweist.

5. Verglasung, die mindestens eine Scheibe aus in der Masse gefärbtem Kalk-Natron-Silicat-Glas mit verringertem Energiedurchgangsgrad umfaßt, **dadurch gekennzeichnet, daß** die Scheibe aus einem Glas gebildet ist, das farbgebende Oxide in folgenden näherungsweisen Gewichtsanteilen:
Fe₂O₃ 0,75 bis 0,90 %,
FeO 0,15 bis 0,22 % und
CoO weniger als 17 ppm
enthält.

6. Verglasung nach Anspruch 5, **dadurch gekennzeichnet, daß** das Verhältnis von Fe²⁺/Fe im die Scheibe bildenden Glas etwa 0,20 beträgt.

7. Verglasung nach Anspruch 5 oder 6 , **dadurch gekennzeichnet, daß** die Glasscheibe ein Verhältnis des Lichttransmissionsgrades zum Energiedurchgangsgrad von τ/g von etwa 1,40 oder 1,50 aufweist.

8. Verglasung nach einem der vorhergehenden Ansprüche, **dadurch gekennzeichnet, daß** die Glasscheibe 3,5 oder 4 mm dick sein kann und sie grün gefärbt ist.
